# EUROPÄISCHE PATENTSCHRIFT

(11) **EP 3 820 685 B1**
(45) Veröffentlichungstag und Bekanntmachung des Hinweises auf die Patenterteilung: **06.09.2023**
(21) Anmeldenummer: 19736367.4
(22) Anmeldetag: 03.07.2019
(51) Int. Cl.: B29D 11/00, G02B 7/182, B24B 13/00, B24B 29/02

(54) **VERFAHREN ZUR HERSTELLUNG EINES OPTISCHEN SYSTEMS MIT EINER OPTISCHEN KOMPONENTE AUS EINEM SPRÖDHARTEN MATERIAL**
METHOD FOR PRODUCING AN OPTICAL SYSTEM WITH AN OPTICAL COMPONENT FROM A BRITTLE-HARD MATERIAL
PROCEDE DE PRODUCTION D'UN SYSTEME OPTIQUE AVEC UN COMPOSANT OPTIQUE A PARTIR D'UN MATERIAU DUR ET CASSANT

(30) Priorität: 11.07.2018 DE 102018116816
(43) Veröffentlichungstag der Anmeldung: 19.05.2021
(73) Patentinhaber: Fraunhofer-Gesellschaft zur Förderung der angewandten Forschung e.V., 80686 München (DE)
(72) Erfinder: BEIER, Matthias, 07745 Jena (DE); RISSE, Stefan, 07745 Jena (DE); GEBHARDT, Andreas, 07745 Jena (DE)
(74) Vertreter: Epping - Hermann - Fischer
(86) Internationale Anmeldenummer: PCT/EP2019/067866
(87) Internationale Veröffentlichungsnummer: WO 2020/011622

(56) Entgegenhaltungen:
- DE-B3-102009 041 501
- DE-B3-102015 120 853
- Sebastian Scheiding: "Vereinfachung der Systemmontage von metalloptischen IR-Spiegelteleskopen", , 2. März 2014 (2014-03-02), XP055615878, Gefunden im Internet: URL:http://publica.fraunhofer.de/eprints/u rn_nbn_de_0011-n-3072697.pdf [gefunden am 2019-08-27]
- XAVIER TONNELLIER: "Precision grinding for rapid fabrication of segmentsfor extremely large telescopes using the Cranfield BoX", PROCEEDINGS OF SPIE, 2010, Seiten 1-8, XP040538789, DOI: 10.1117/12.858806

## Beschreibung

Die Erfindung betrifft ein Verfahren zur Herstellung eines optischen Systems mit einer optischen Komponente, die ein sprödhartes Material wie zum Beispiel ein Glas, eine Keramik oder eine Glaskeramik aufweist.

Diese Patentanmeldung beansprucht die Priorität der deutschen Patentanmeldung 10 2018 116 816 .0.

Optisch abbildende Linsen- oder Spiegelsysteme mit hohen Anforderungen an die Abbildungsgüte finden zum Beispiel Anwendung in hochpräzisen optischen Instrumenten im Bereich der Astronomie, Erd- und Fernerkundung, Präzisionsmesstechnik und Mikrolithographie. Die Abbildungsqualität des optischen Systems wird entscheidend durch das optische und mechanische Systemdesign sowie die erzielbaren Fertigungs- und Montagequalitäten der Optikflächen im Strahlengang beeinflusst. Mit steigender Komplexität der Flächengeometrien sowie steigenden Abbildungsqualitäten steigt ebenfalls der Aufwand für die Systemmontage. Es besteht daher ein Bedarf für Verfahren zur vereinfachten Systemintegration komplexer optischer Systeme.

Aus dem Stand der Technik sind Verfahren der Mikrozerspanung zur Bearbeitung optisch hochqualitativer Bauteile bekannt, die neben der Bearbeitung der Optikfläche weiterhin die Bearbeitung von Mess-, Anlage- und Montagestrukturen in der gleichen Maschinenaufspannung ermöglichen. In der Druckschrift DE 10 2009 041 501 B3 ist beispielsweise der Aufbau eines metalloptischen Spiegelteleskops mit rotationssymmetrisch asphärischen Flächen unter Nutzung von mikrospanend bearbeiteten Referenz- und Anlagestrukturen an den Spiegelkörpern beschrieben. Voraussetzung zur Anwendung der genannten Fertigungs- und Montagestrategie ist die Verwendung von mikrospanend bearbeitbaren Werkstoffen für Optik- und Mechanikbauteile. Grund hierfür ist insbesondere die notwendige Genauigkeit in der Lagezuordnung zwischen Optik- und Mechanikflächen am Spiegelkörper im teilweise Sub-Mikrometer- respektive Winkelsekundenbereich, welche im Stand der Technik durch die Bearbeitung in einer gemeinsamen Maschinenaufspannung auf einer Ultrapräzisionsbearbeitungsmaschine hergestellt wird. Jeder zusätzliche Umspann- oder Demontageprozess reduziert die Genauigkeit der Lagezuordnung zwischen optischem und mechanischem Koordinatensystem. Weiterhin kann die erforderliche hohe Qualität in der Lagezuordnung nur gewährleistet werden, wenn nach dem ultrapräzisen Zerspanungsprozess keine weiteren abtragenden Fertigungsprozesse eingesetzt werden, welche die hergestellte Genauigkeit der Lagebeziehung signifikant verändern. Vorrangig verwendete Werkstoffe für derartige Spiegelkörper sind z.B. verschiedene Aluminiumlegierungen oder Nickel-Phosphor.

Die Druckschrift DE 10 2015 120 853 B3 beschreibt ein Verfahren und eine Vorrichtung zur Herstellung eines optischen Bauteils mit mindestens drei monolithisch angeordneten optischen Funktionsflächen.

In der Dissertation von Sebastian Scheiding mit dem Titel "Vereinfachung der Systemmontage von metalloptischen IR-Spiegelteleskopen", ISBN 978-3-8396-0774-9 wird die Montage von metalloptischen IR-Spiegelteleskopen behandelt.

Der Artikel von Xavier Tonnellier et al. mit dem Titel "Precision grinding for rapid fabrication of segments for extremely large telescopes using the Cranfield BoX", Proc. of SPIE Vol 7739, 773905, Seiten 1-8 (2010) befasst sich mit der Präzisionsbearbeitung für Segmente extrem großer Teleskope.

Für einige Anwendungen, insbesondere in der Astronomie, der Erd- und Fernerkundung sowie der Mikrolithographie, stellt die Verwendung metallischer Werkstoffe, wie z.B. Aluminiumlegierungen, zum Aufbau des optischen Spiegelsystems aufgrund der thermischen und mechanischen Eigenschaften der metallischen Werkstoffe nur eine bedingt geeignete Option dar. So limitiert der im Vergleich zu optischen Gläsern und Glaskeramiken erhöhte Wärmeausdehnungskoeffizient eines metallischen Werkstoffes die Anwendung für hohe Temperaturänderungen bzw. -gradienten. Für astronomische Instrumente bei kryogenen Anwendungstemperaturen werden daher oftmals sprödharte Glaskeramiken mit einem beispielhaften Wärmeausdehnungskoeffizienten < 0,03*10⁻⁶ 1/K verwendet. Für extraterrestrische Anwendungen stellt bei metallischen Werkstoffen insbesondere die spezifische Steifigkeit des Materials eine Limitierung dar. Zum beschädigungsfreien Überstehen von Vibrations- und Schocklasten während des Starts in den Weltraum müssen die Spiegelkörper eine hohe Steifigkeit aufweisen. Gleichzeitig ist oftmals eine geringe Bauteilmasse der Spiegelkörper wünschenswert. Als Basismaterialien für den Aufbau der Spiegelkörper werden daher oftmals sprödharte keramische Materialien, wie beispielsweise Siliziumcarbid oder Berylliumverbindungen, verwendet.

Den Vorteilen sprödharter Werkstoffe für die Verwendung als Material für optische Spiegelkörper unter erhöhten strukturellen oder thermalen Lasten steht eine gegenüber metallischen Werkstoffen aufwendigere Bearbeitungstechnik durch Schleif-, Polier- und Korrekturtechniken entgegen. Sprödharte Spiegelkörper werden typischerweise durch geeignete Fassungstechniken in einer, oftmals metallischen, Haltestruktur aufgenommen und anschließend im Strahlengang des optischen Systems platziert und ausgerichtet. Der Übertrag des optischen Koordinatensystems der Spiegelfläche auf das mechanische Koordinatensystem der Haltestruktur ist durch die erreichbare Qualität des Fügeprozesses gekennzeichnet. Dadurch liegen die Toleranzen in der Lagezuordnung typischerweise eine Größenordnung über der Qualität von mikrospanend hergestellten maßlichen Bezügen eines metalloptischen Systems. Eine effiziente Montage einzelner Komponenten zu einem gemeinsamen Spiegelsystem nach Vorbild einer Steckmontage ist für sprödharte Spiegelmaterialien im aktuellen Stand der Technik nicht gelöst.

Eine zu lösende Aufgabe besteht somit darin, ein Verfahren zur Herstellung eines optischen Systems anzugeben, das eine vereinfachte Montage einer optischen Komponente aus einem sprödharten Material in das optische System ermöglicht.

Gemäß zumindest einer Ausführungsform wird bei dem Verfahren zur Herstellung eines optischen Systems mit einer optischen Komponente, die ein sprödhartes Material aufweist, mindestens eine optische Funktionsfläche an der optischen Komponente hergestellt. Die optische Komponente kann zum Beispiel ein Spiegel sein, wobei die optische Funktionsfläche eine Spiegelfläche ist. Alternativ ist es aber auch möglich, dass die optische Komponente eine Linse oder ein diffraktives optisches Element ist, wobei die optische Funktionsfläche eine Linsenfläche oder eine Fläche mit einer diffraktiven Struktur ist.

In einem weiteren Schritt des Verfahrens wird die optische Komponente auf eine Bearbeitungsmaschine aufgenommen. Durch mindestens ein Bearbeitungswerkzeug der Bearbeitungsmaschine werden mehrere Referenzflächen und Montageflächen an der optischen Komponente oder an mindestens einem dauerhaft mit der optischen Komponente verbundenen Einsetzkörper hergestellt. Die Herstellung der Referenz- und Montageflächen erfolgt insbesondere durch eine Ultrapräzisionsbearbeitung mit den Bearbeitungswerkzeugen der Bearbeitungsmaschine. Die Referenzflächen sind insbesondere dazu vorgesehen, ein Koordinatensystem zur Vermessung der Form und Lage der optischen Komponente zu definieren. Die Montageflächen sind dazu vorgesehen, bei der späteren Montage der optischen Komponente in das optische System als Montage- oder Anlagefläche zu dienen. Die Referenz- und Montageflächen liegen vorteilhaft nach einer ultrapräzisen Bearbeitung auf der Bearbeitungsmaschine in einer Form- und Lageabweichung in der Größenordnung der Positionierungenauigkeit der Bearbeitungsmaschine und spannen so ein Koordinatensystem auf, zu dem die optische Funktionsfläche relativ in Form und Lage vermessen werden kann.

In einem nachfolgenden Schritt wird die Form und Lage der optischen Funktionsfläche in einem auf die Referenzflächen bezogenen Koordinatensystem vermessen. Das Vermessen erfolgt beispielsweise durch einen taktilen oder optischen Messprozess.

In einem weiteren Schritt wird mindestens einmal eine Korrekturbearbeitung durchgeführt, bei der die Form- und Lageabweichung der optischen Funktionsfläche relativ zu den Referenz- und Montageflächen reduziert wird. Dieser Schritt wird gegebenenfalls so oft wiederholt, bis die Form und Lage der optischen Funktionsfläche innerhalb eines vorgegebenen Toleranzbereichs mit einer Spezifikation übereinstimmt.

Nachfolgend wird die optische Komponente an den Montageflächen in eine Gehäusestruktur des optischen Systems eingebaut. Durch das Verfahren wird eine vereinfachte Montage der optischen Komponente in die mechanische Gehäusestruktur des optischen Systems durch Aufnahme über die vorteilhaft ultrapräzise bearbeiteten Montageflächen ermöglicht. Da die Form und Lage der optischen Funktionsfläche der optischen Komponente relativ zu den Montageflächen nach Durchführung des Verfahrens mit hoher Präzision bekannt ist, kann die optische Komponente an den Montageflächen auf einfache Weise in einer zumindest nahezu optimalen Position in das optische System montiert werden. Das ist insbesondere dann von großem Vorteil, wenn auch die mechanischen Montageflächen an der Gehäusestruktur durch eine ultrapräzise Bearbeitung gefertigt wurden und ebenfalls eine hohe Maß- und Positionshaltigkeit aufweisen. Das optische System kann beispielsweise ein Teleskop oder ein Gerät für die Erd- oder Fernerkundung sein. Insbesondere kann das optische System für Anwendungen im Weltraum vorgesehen sein.

Gemäß zumindest einer Ausführungsform ist das sprödharte Material der optischen Komponente ein Glas, eine Keramik oder eine Glaskeramik. Das sprödharte Material kann insbesondere eine Glaskeramik mit vernachlässigbar kleinem thermischem Ausdehnungskoeffizienten oder eine Keramik, beispielsweise Siliziumcarbid oder eine Berylliumverbindung, sein. Die Referenzflächen und/oder die Montageflächen können bei dem Verfahren insbesondere direkt im sprödharten Material der optischen Komponente erzeugt werden. Alternativ können die Referenzflächen und/oder die Montageflächen an dem mindestens einem dauerhaft an der optischen Komponente angebrachten Einsetzkörper erzeugt werden.

Die Herstellung der Referenz- und/oder Montageflächen erfolgt vorzugsweise durch ein mikrospanendes Dreh-, Fräs- oder Hobelverfahren. Alternativ erfolgt die Herstellung der Referenz- und/oder Montageflächen durch ein Schleifverfahren oder durch ein ultraschallgestütztes Dreh- oder Fräsverfahren.

Gemäß einer Ausführungsform des Verfahrens wird die optische Komponente vor der Herstellung der Referenz- und Montageflächen auf einer Bearbeitungsvorrichtung angeordnet, welche weitere Referenzflächen aufweist. Die optische Komponente ist bei einer bevorzugten Variante des Verfahrens auch beim Verfahrensschritt des Vermessens der Form und Lage der optischen Funktionsfläche auf der Bearbeitungsvorrichtung angeordnet, wobei die Form und Lage der optischen Funktionsfläche relativ zu den weiteren Referenzflächen vermessen wird. Bei einer Variante des Verfahrens ist die optische Komponente schon bei der Herstellung der optischen Funktionsfläche und/oder bei einem nachfolgenden Formkorrektur- oder Polierprozess der optischen Funktionsfläche auf der Bearbeitungsvorrichtung angeordnet.

Die Korrekturbearbeitung der optischen Fläche erfolgt vorzugsweise durch einen computergesteuerten Politurprozess oder durch ein Ionenstrahlwerkzeug.

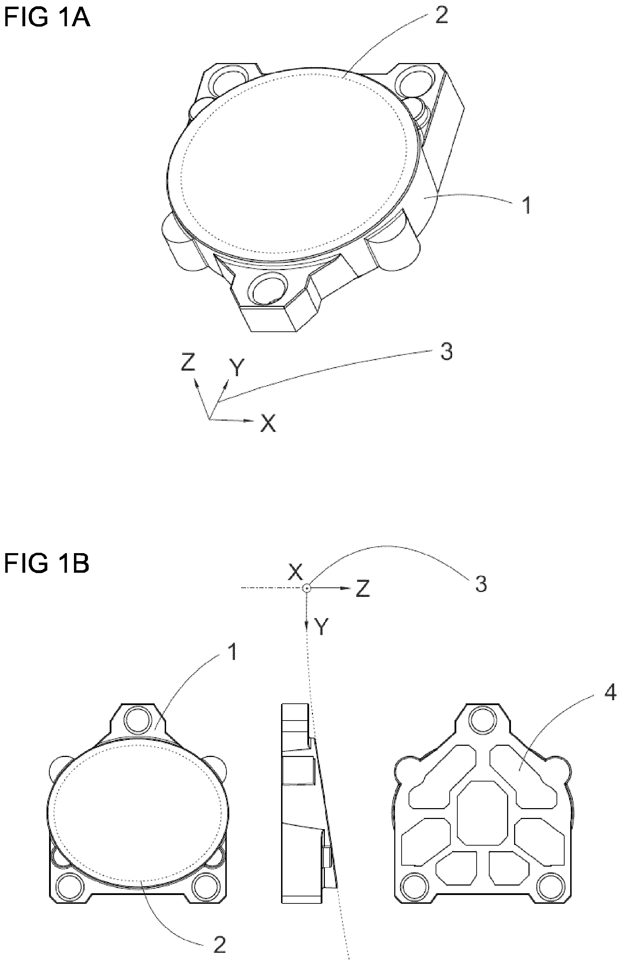

Im Folgenden soll die Erfindung beispielhaft näher erläutert werden. Dabei zeigen die dargestellten Figuren Beispiele einer Ausführungsvariante des Verfahrens zur Herstellung einer optischen Komponente und eines optischen Systems mit der optischen Komponente, wobei die optische Komponente ein optischer Spiegelkörper aus einem sprödharten Material ist. Typische Materialien für den Spiegelkörper sind u.a. optische Gläser und Glaskeramiken, optische Kristalle und keramische Materialien. Das Verfahren zur Herstellung der Komponenten inklusive Ausführungsbeispielen zur vorteilhaften Gestaltung einer Gesamtprozesskette sowie Systemmontage werden im Folgenden im Zusammenhang mit den Figuren 1 bis 10 näher erläutert.

Es zeigen:
Fig. 1A einen Spiegelkörper aus einem sprödharten Material in isometrischer Ansicht,
Fig. 1B den Spiegelkörper in einer weiteren Ansicht,
Fig. 2 den Spiegelkörper nach dem Einfügen eines Einsatzstücks,
Fig. 3 den Spiegelkörper auf einer Bearbeitungsvorrichtung,
Fig. 4 die von dem Spiegelkörper und der Bearbeitungsvorrichtung gebildete Baugruppe auf einer Bearbeitungsmaschine,
Fig. 5A eine Detailansicht der Herstellung der Referenzflächen,
Fig. 5B eine weitere Detailansicht der Herstellung von Referenzflächen,
Fig. 6 den Spiegelkörper beim Vermessen in einer hochgenauen Messvorrichtung,
Fig. 7 eine Seitenansicht eines optischen Spiegelteleskops, in das der Spiegelkörper montiert ist,
Fig. 8A eine Schnittdarstellung eines Feinschleifprozesses zur Herstellung der optischen Funktionsfläche bei einer Ausführungsform des Verfahrens,
Fig. 8B eine Schnittdarstellung der Politur und Formkorrektur der optischen Funktionsfläche bei einer Ausführungsform des Verfahrens,
Fig. 9 den Spiegelkörper auf der Bearbeitungsmaschine bei einer Ausführungsform des Verfahrens, und
Fig. 10 ein Beispiel einer optischen Komponente mit zwei optisch wirksamen Funktionsflächen bei einer weiteren Ausführungsform des Verfahrens.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

In den Figuren 1A und 1B ist ein Spiegelkörper als Beispiel für die bei dem Verfahren hergestellte optische Komponente 1 dargestellt. Das Verfahren ist aber ohne Einschränkung auch auf die Herstellung und anschließende Montage anderer optischer Komponenten aus sprödhartem Material, z.B. von refraktiven Linsensystemen, anwendbar. Die optische Komponente 1 wie der Spiegelkörper in Fig. 1A kann durch einen formgebenden Trenn- oder Konturierungsprozess hergestellt werden und liegt dann vorteilhaft bereits in einer Geometrie nahe der Sollgeometrie vor. Die Bearbeitung der optischen Komponente 1 aus einem sprödharten Material kann insbesondere durch Konturschleifen oder ultraschallunterstütztes Konturfräsen der geometrischen Außenflächen des Spiegelkörpers erfolgen, gefolgt von möglichen Reinigungs- und Messschritten.

Bei dem Verfahren wird eine optische Funktionsfläche 2 der optischen Komponente 1 hergestellt. Im hier gezeigten Beispiel ist die optische Komponente 1 ein Spiegelkörper, der eine Spiegelfläche als optische Funktionsfläche 2 aufweist. Die Herstellung der Spiegelfläche erfolgt insbesondere derart, dass sie im Bereich der freien Apertur vorbestimmte Form- und Rauheitsanforderungen für die optische Anwendung erfüllt. Die optische Funktionsfläche 2 und deren freie Apertur sind üblicherweise zu einem globalen oder lokalen Koordinatensystem 3 definiert. Im Beispiel der Fig. 1A liegt die freie Apertur der Spiegelfläche als außeraxialer Flächenabschnitt zum kartesischen Koordinatensystem 3 vor und weist eine konkave Oberflächenform auf. Das Verfahren kann mit besonderem Vorteil auf axiale und außeraxiale optische Funktionsflächen 2 mit asphärischer oder freigeformter Oberflächengeometrie angewandt werden. Ohne Einschränkung kann das erfindungsgemäße Verfahren jedoch auch für die Herstellung und Montage einer optischen Komponente von planen oder sphärischen optischen Funktionsflächen angewendet werden.

Fig. 1B zeigt die bereits in Fig. 1A dargestellte vorkonturierte optische Komponente 1 in einer zusätzlichen Ansicht. Die optische Komponente 1 kann eine konturierte Rückseite aufweisen, die z.B. Kühlstrukturen aufweist. Wie in Fig. 1B dargestellt, können an der Rückseite der optischen Komponente 1 Ausnehmungen 4 ausgebildet sein, zum Beispiel ausgeschliffene oder ausgefräste Bereiche, die vorteilhaft das Gewicht der optischen Komponente reduzieren und so eine Leichtgewichtsstruktur ausbilden.

Die Formgebung der optischen Funktionsfläche 2 der optischen Komponente 1 erfolgt typischerweise durch ein trennendes Fertigungsverfahren und kann in mehreren Prozessschritten erfolgen. Die Bearbeitung der optischen Funktionsfläche 2 kann insbesondere durch einen Schleifprozess und nachfolgenden Polierprozess erfolgen. Aufgrund der sprödharten Materialeigenschaften kann mit Vorteil eine Abfolge von Schleifprozessen angewandt werden, insbesondere basierend auf sog. Topf- oder Scheibenwerkzeugen auf CNC-gesteuerten Schleifmaschinen. Bei den Schleifprozessen werden vorteilhaft die Körnungen der verwendeten Schleifwerkzeuge ausgehend vom sog. Vorschleifen bis hin zum Feinstschleifen sukzessive verringert.

Nach dem Schleifprozess verbleibt eine für optische Anwendungen matte Oberfläche mit erhöhter Oberflächenrauheit, die in einer oberflächennahen Schicht mechanische Spannungen und Risse aufweisen kann (sog. "Tiefenschäden" bzw. engl. "Sub-Surface Damage"). Zur Reduzierung der Oberflächenrauheit und zur Beseitigung der Tiefenschäden kann die optische Funktionsfläche 2 anschließend poliert werden, insbesondere durch Anwendung verschiedener Polierverfahren. Die benötigten Materialabträge im Schleif- und Polierprozess sind abhängig von der Oberflächenqualität nach dem Vorkonturierungsprozess bzw. den gewählten Prozessparametern und Materialien in den Prozessen. Als typische Größenordnung für einen Materialabtrag im Schleifprozess sei an dieser Stelle eine Schichtdicke von 50 µm - 500 µm genannt, für nachfolgende Polierprozesse liegt der benötigte Materialabtrag oftmals im Bereich 10 µm - 50 µm. Es sei weiterhin darauf hingewiesen, dass Schleif- und Polierprozesse üblicherweise auf unterschiedlichen CNC-gesteuerten Bearbeitungsmaschinen mit begrenzter Genauigkeit der Positionierung der Bearbeitungswerkzeuge geschehen, so dass insbesondere die Lage der optischen Funktionsfläche 2 in Bezug zum Koordinatensystem 3 und den Außenkonturen der optischen Komponente 1 im Bereich mehrerer zehn Mikrometer bis hin zu Millimetern variieren kann.

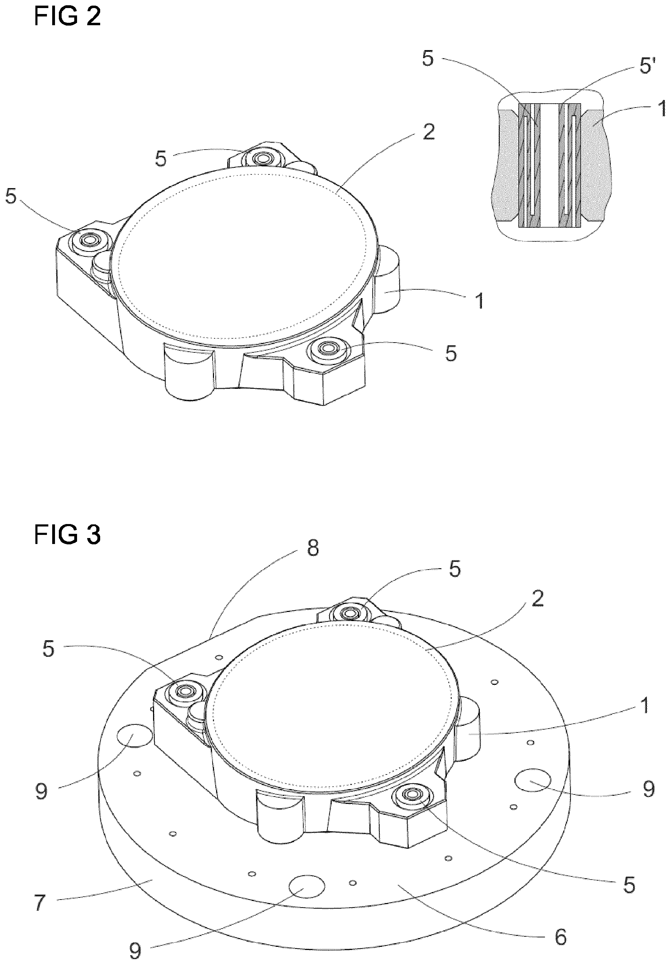

Fig. 2 zeigt die optische Komponente 1 inklusive der optischen Funktionsfläche 2, welche nach der wie zuvor beschriebenen Herstellung vorteilhaft in einer Qualität bezüglich Oberflächenform und -rauheit nahe der Endspezifikation vorliegt. Bei Verwendung an sich bekannter CNC-gestützter Schleif- und Polierprozesse kann eine Abweichung der optischen Funktionsfläche 2 nach optimierter Einpassung zur Sollform (sog. "Best-Fit-Einpassung") in etwa bis zu 5 µm betragen, gemessen vom Punkt der höchsten zum Punkt der tiefsten Abweichung.

Im Folgenden sieht das Verfahren vor, durch Bearbeitung verschiedener Referenz- und Montageflächen auf einer Bearbeitungsmaschine, insbesondere einer Ultrapräzisionsbearbeitungsmaschine, einen hochgenauen Lagebezug zwischen den Referenz- und Montageflächen und der optischen Funktionsfläche 2 zu generieren. Im Beispiel der Figur 2 weist die optische Komponente 1 mehrere Einsetzkörper (Inserts) 5 auf, welche zum Beispiel durch einen Fügeprozess in vorgesehene Bohrungen der optischen Komponente 1 eingesetzt werden und Oberflächen aufweisen, die Montageflächen 5' ausbilden. Nach dem Einfügen der Einsetzkörper 5 kann deren relative Lage zur optischen Spiegelfläche 2 durch einen Messprozess bestimmt werden. Die Montageflächen 5' können durch ein mikrospanendes Verfahren oder durch Schleifen bearbeitet werden. In einer Detailansicht ist in Fig. 2 ein Schnitt durch einen beispielhaften Einsetzkörper 5 dargestellt. Möglich ist beispielsweise die Ausgestaltung des Einsetzkörpers 5 als Festkörpergelenkstruktur, um nach Montage der optischen Komponente 1 über die Montageflächen 5' mechanische Spannungen zu relaxieren und eine Deformation der optischen Funktionsfläche 2 zu minimieren.

In Fig. 3 ist eine vorteilhafte Ausführungsform des Verfahrens dargestellt, bei der die optische Komponente 1 inklusive den Einsetzkörpern 5 auf einer Bearbeitungsvorrichtung 6 aufgenommen wird. Die Aufnahme kann durch verschiedene Spanntechniken geschehen, wobei spannungsarme Spanntechniken basierend auf Vakuumspannungen oder Kleben bevorzugt werden. Insofern es die Geometrien der optischen Komponente 1 der und Bearbeitungsvorrichtung 6 zulassen, kann ebenfalls eine Aufnahme über die Einsetzkörper 5 geschehen. In einer besonders vorteilhaften Ausführung besitzt die Bearbeitungsvorrichtung 6 bereits verschiedene Referenzflächen zur Referenzierung in nachfolgenden Mess- und Bearbeitungsprozessen, welche vorteilhafterweise durch mikrospanende Bearbeitungstechniken auf einer Bearbeitungsmaschine, insbesondere durch eine Ultrapräzisionsbearbeitung, hergestellt wurden. Beispielhaft zeigt Fig. 3 Referenzflächen 7, 8, 9 an der Bearbeitungsvorrichtung 6 in Form einer bearbeiteten Umfangsfläche 7 zur lateralen Referenzierung des Mittenpunktes, einer Planfläche 8 an der umlaufenden Fläche zur Referenzierung und Fixierung der axialen Rotation, sowie vier Kugelsegmenten 9, welche vorteilhafterweise durch einen mikrospanenden Prozess hergestellt werden. Die Lage aller Referenzflächen 7, 8 und 9 der Bearbeitungsvorrichtung 6 kann mit hoher Genauigkeit auf einer beispielsweise taktilen, dreidimensional arbeitenden Koordinatenmessmaschine bestimmt werden. Ebenso kann die Lage des Spiegelkörpers 3 bzw. dessen optischer Funktionsfläche 2 nach Aufnahme auf die Bearbeitungsvorrichtung 6 durch Anwendung taktiler oder optischer Messverfahren in hoher Qualität bestimmt werden.

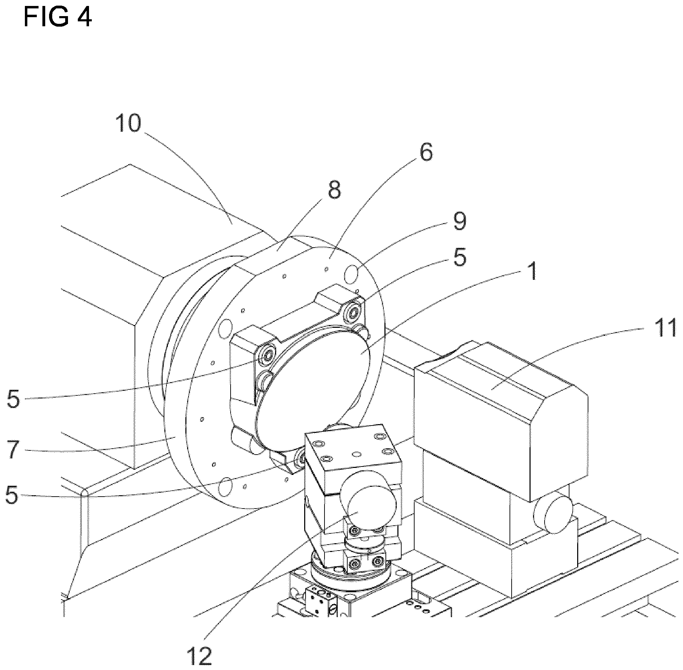

Fig. 4 zeigt die optische Komponente 1 auf der Bearbeitungsvorrichtung 6 nach Aufnahme auf eine Bearbeitungsmaschine 10, die insbesondere eine Ultrapräzisionsbearbeitungsmaschine ist. Die Bearbeitungsmaschine 10 ist beispielweise eine ultrapräzise Drehmaschine mit einer rotatorisch arbeitenden Hauptspindel und mehreren linear arbeitenden Verfahrachsen. Die Bearbeitungsmaschine 10 kann alternativ andere Bearbeitungswerkzeuge und/oder Achsanordnungen aufweisen, wobei neben ultrapräzisen Drehprozessen zum Beispiel auch ultrapräzise Fräs-, Hobel- oder Schleifprozesse angewendet werden können. Besonders bevorzugt ist die Bearbeitung auf einer ultrapräzisen Bearbeitungsmaschine, welche typischerweise Positionierunsicherheiten der verwendeten Linearachsen unterhalb eines Nanometers aufweist. Beispielhaft zeigt Fig. 4 einen Aufbau von zwei Bearbeitungswerkzeugen 11, 12 auf einer Linearachse der Bearbeitungsmaschine 10. Dabei ist ein erstes Bearbeitungswerkzeug 11 beispielhaft als Drehwerkzeug zur mikrospanenden Bearbeitung und ein zweites Bearbeitungswerkzeug 12 als Schleifspindel, insbesondere zur Bearbeitung eines sprödharten Materials, ausgebildet. Beide Bearbeitungswerkzeuge 11, 12 besitzen eine präzise Referenzierung innerhalb des Maschinenkoordinatensystems der Bearbeitungsmaschine 10, wodurch die relative Lage der Bearbeitungswerkzeuge 11, 12 mit einer Präzision deutlich unterhalb eines Mikrometers bekannt ist.

Vorteilhafterweise ist die Bearbeitungsvorrichtung 6 in Fig. 4 konstruktiv derart ausgelegt, dass mit den Bearbeitungswerkzeugen 11, 12 die Referenz- und Montageflächen sowohl an der Bearbeitungsvorrichtung 6 als auch an der optischen Komponente bearbeitet werden können. Das betrifft für die in Fig. 4 beispielhaft dargestellte Anordnung insbesondere die Referenzflächen 7, 9 der Bearbeitungsvorrichtung 6 sowie die Montageflächen 5' und weitere Referenzflächen an der optischen Komponente 1. Aufgrund eventuell auftretender Kontaminationen infolge von z.B. Stäuben und Spänen während der ultrapräzisen Bearbeitung kann es vorteilhaft sein, die optische Funktionsfläche 2 der optischen Komponente 1 während der Aufnahme auf der Bearbeitungsmaschine 10 durch eine vorzugsweise an das Material der optischen Funktionsfläche 2 angepasste Lackierung zu schützen.

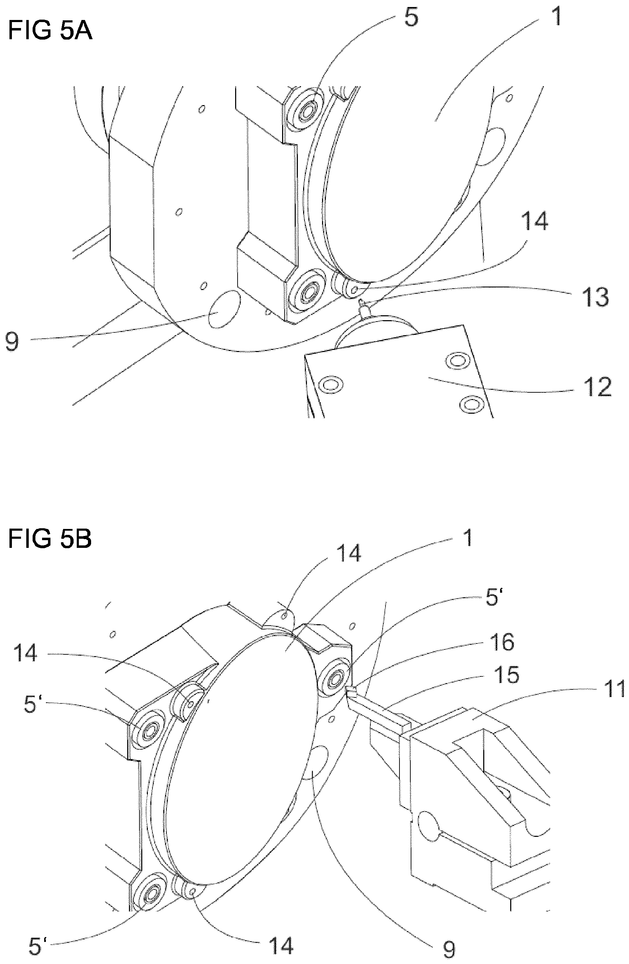

In Fig. 5A ist eine Detailansicht der optischen Komponente 1 auf der Bearbeitungsmaschine bei der Bearbeitung von Referenzflächen 14 an dem Spiegelkörper dargestellt. Vorteilhaft ist die Lage der optischen Komponente 1 innerhalb des Maschinenkoordinatensystems der Bearbeitungsmaschine, beispielsweise durch einen vorhergehenden Messprozess, bekannt. Das Verfahren sieht es nun vor, durch Bearbeitung mit einem Bearbeitungswerkzeug 13 definierte Referenz- und Montageflächen an der optischen Komponente 1 zu erzeugen. Die Referenz- und Montageflächen können bei dem Verfahren hinsichtlich ihrer Form und Lage vorteilhaft in hoher Qualität entsprechend typischen Fertigungstoleranzen einer ultrapräzisen Bearbeitungsmaschine hergestellt werden. Beispielhaft sind die Referenzflächen 14 in Fig. 5A als konkave Kugelsegmente an eigens dafür vorgesehenen Positionen an der optischen Komponente 1 ausgeführt. Die Kugelsegmente 14 werden beispielsweise durch Bearbeitung mit einem Schleifwerkzeug 13, welches auf einer Schleifspindel 12 aufgenommen wird, direkt im sprödharten Material der optischen Komponente 1 gefertigt. Dazu werden entweder die optische Komponente 1 oder die Schleifspindel 12 separat oder gemeinsam definiert bewegt, um einen geeigneten Schnittpfad zu erzeugen. Das Schleifwerkzeug 13 bewegt sich demnach in dem beschriebenen Schnittpfad relativ zur optischen Komponente 1 und rotiert gleichzeitig mit hoher Umfangsgeschwindigkeit, sodass die Kugelsegmente 14 an der optischen Komponente 1 sukzessive eingeschliffen werden. Die so hergestellten Kugelsegmente 14 besitzen untereinander einen sehr präzisen Lagebezug und verkörpern so ein hochgenaues Koordinatensystem, welches zum Koordinatensystem der optischen Komponente 1 eine bestimmte, aber messbare Abweichung in den der Flächengeometrie der optischen Funktionsfläche 2 angepassten Freiheitsgraden besitzt.

Weiterhin werden bei dem Verfahren Montageflächen, insbesondere zur Montage der optischen Komponente 1 in ein optisches System, ohne Umspannen oder Lösen der optischen Komponente 1 von der Bearbeitungsmaschine 10, hergestellt. In Fig. 5B ist beispielhaft die mikrospanende Bearbeitung von Montageflächen 5' an beispielsweise metallisch ausgeführten Einsetzkörpern 5 als mechanische Koppelelemente durch ein Drehwerkzeug 11 dargestellt. Im Bereich der mikrospanenden Bearbeitung wird aufgrund der hervorragenden Schnitteigenschaften oftmals Diamant als spanabhebendes Werkzeug verwendet.

Beispielhaft ist in Fig. 5B ein Diamantwerkzeug 16 auf einem Werkzeughalter 15 dargestellt, welcher von einer Werkzeugvorrichtung 11 aufgenommen wird. Durch eine Relativbewegung zwischen der optischen Komponente 1 und dem Diamantwerkzeug 16 wird ein Schnittpfad erzeugt und anschließend mindestens eine Montagefläche 5' an den Einsetzkörpern zerspant. Die gefertigten Montageflächen 5' liegen vorteilhaft nach der Bearbeitung wiederum mit hoher Form- und Lagequalität entsprechend der Fertigungsqualität der Bearbeitungsmaschine 10 vor.

Weiterhin können bei Verwendung der Bearbeitungsvorrichtung 6 auch Referenzflächen 7, 9 an der Bearbeitungsvorrichtung 6 gefertigt werden, insbesondere durch einen Dreh-, Fräs- oder Schleifprozess. In Fig. 5B sind die dargestellten Kugelsegmente 9 bzw. die umlaufende Zylinderfläche 7 der Bearbeitungsvorrichtung 6 solche Referenzflächen.

Aufgrund der hohen Fertigungsgüte liegen alle mit der Bearbeitungsmaschine 10 erzeugten Referenz- und Montageflächen mit sehr geringen Formabweichungen und sehr geringen relativen Lageabweichungen zueinander vor. Durch eine vorherige Einrichtung unterschiedlicher Bearbeitungswerkzeuge, wie das in den Figuren 5A und 5B beispielhaft dargestellte Schleifwerkzeug 12 oder Drehwerkzeug 11, haben auch die durch unterschiedliche Werkzeuge hergestellten Referenzflächen und Montageflächen einen hervorragenden relativen Lagebezug. Bei dem wie zuvor beschriebenen Verfahren wurden durch die Bearbeitungsschritte insbesondere Referenz- und Montageflächen mit hoher Qualität und Lage geschaffen, welche ein neues Koordinatensystem definieren und die Einbauposition der optischen Komponente 1 in eine Gehäusestruktur eines optischen Systems oder optischen Systems in verschiedenen Freiheitsgraden vorgeben. Da die optische Funktionsfläche 2 selbst nicht auf der Bearbeitungsmaschine 10 bearbeitet wird, hängt die Lageabweichung der Funktionsfläche 2 innerhalb des durch die Bearbeitungsprozesse erzeugten Koordinatensystems von der Qualität der vorherigen Herstellung der optischen Funktionsfläche 2 an der optischen Komponente 1 und der Montagegenauigkeit der optischen Komponente 1 auf die Bearbeitungsmaschine 10 ab. Bei der vorteilhaften Verwendung einer zuvor ebenfalls ultrapräzise bearbeiteten Bearbeitungsvorrichtung 6 kann die optische Komponente 1 zunächst mit einer geringen Lageabweichung auf der Bearbeitungsvorrichtung 6 aufgenommen werden und anschließend nach Aufnahme auf die Bearbeitungsmaschine 10 zu dieser referenziert werden.

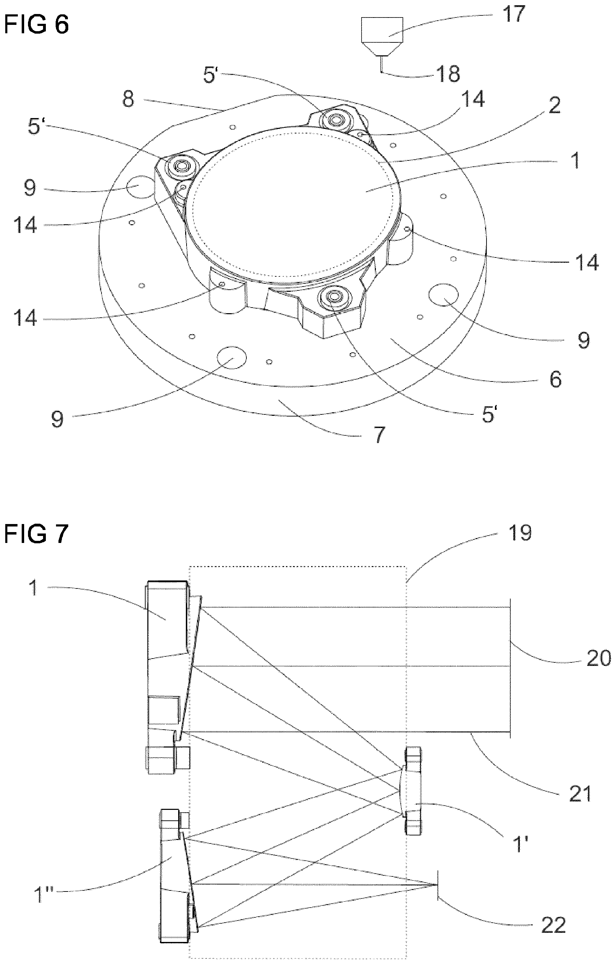

In Fig. 6 ist der Spiegelkörper 1 auf der Bearbeitungsvorrichtung 6 innerhalb einer Messmaschine dargestellt, welche beispielhaft durch ein taktiles Messverfahren mit einem Messkopf 17 und einem Messtaster 18 die Form und Lage von Elementen an der optischen Komponente 1 vermisst. In einer vorteilhaften Ausführung wird die während der ultrapräzisen Bearbeitung verwendete Bearbeitungsvorrichtung 6 als Messvorrichtung innerhalb des Messprozesses genutzt. Der Messprozess ermöglicht es nun, die Lage und Form der optischen Funktionsfläche 2 relativ zu den ultrapräzise gefertigten Referenz- und Montageflächen 14, 5' mit hoher Qualität zu vermessen. Gleichzeitig kann eine Lageprüfung zu den Referenzflächen 7, 8, 9 der Bearbeitungsvorrichtung 6 erfolgen. Als Resultat des Messprozesses ergibt sich zum einen eine Information zur Lageabweichung der optischen Funktionsfläche 2 relativ zu den Referenz- und Montageflächen 5', 14, und zum anderen eine Information über einen verbleibenden Formfehler der optischen Funktionsfläche 2. Neben dem beispielhaft dargestellten taktilen Messprinzip unter Nutzung eines Messkopfes 17 mit Messtaster 18, ist auch die Anwendung optisch wirksamer Messprinzipien möglich. So kann die optische Funktionsfläche 2 beispielsweise durch ein interferometrisches Prüfverfahren vermessen werden, um beispielsweise den Formfehler mit hoher Messgenauigkeit zu ermitteln oder auch einen relativen Lagefehler der optische Funktionsfläche 2 zu den an der optischen Komponente 1 oder an der Bearbeitungsvorrichtung 6 hergestellten Referenzflächen 9, 14 zu ermitteln.

Das Verfahren sieht es weiterhin vor, die als Resultat des Messprozesses ermittelten Form- und Lageabweichungen der optischen Funktionsfläche 2 durch eine nachfolgende Korrekturbearbeitung zu minimieren, insbesondere bis eine vorgegebene Spezifikation innerhalb eines vorgegebenen Toleranzbereichs erreicht wird. Im Allgemeinen soll die Qualität der Herstellung der optischen Funktionsfläche 2 und Referenz- und Montageflächen 5', 14 hinreichend gut sein, um die verbleibenden Form- und Lageabweichungen durch beispielweise einen computergesteuerten Formkorrekturprozess in einer definierten Anzahl von Prozessschritten zu korrigieren. Hierzu können zum Beispiel Polier- und Korrekturtechniken auf Basis von Subapertur-Polierwerkzeugen oder einem Ionenstrahl angewandt werden. Dabei werden von der optischen Funktionsfläche 2 typischerweise maximal nur noch wenige Mikrometer Material abgetragen. Gleichzeitig erlaubt die Korrekturbearbeitung eine Herstellung der optischen Funktionsfläche 2 mit einer Form- und / oder Lageabweichung weniger Nanometer zur theoretischen Sollform. Ein Vorteil des Verfahrens ist, dass die Korrekturbearbeitung nun relativ zu den hergestellten Referenz- und Montageflächen 5', 14 geschieht. Durch iterative Anwendung von Mess- und Korrekturprozessen wird eine deterministische Reduzierung verbleibender Form- und Lagefehler ermöglicht. Die relative Lage der optischen Funktionsfläche 2 ist in jeder Iteration mit hoher Genauigkeit durch einen taktilen oder optischen Messprozess ermittelbar.

Fig. 7 zeigt ein Beispiel der Montage der optischen Komponente 1 in ein optisches System bei dem Verfahren. Das optische System ist in Fig. 7 ein optisches Spiegelteleskop, das optische Komponenten 1, 1', 1" aufweist, bei denen es sich um drei Spiegelkörper 1, 1', 1" handelt. Das Spiegelteleskop ist dazu eingerichtet, ein Objekt aus einer Objektebene 20 in eine Bildebene 22 abzubilden. Beispielhaft ist zum besseren Verständnis der optische Strahlengang 21 in dem optischen System dargestellt.

Durch die Herstellung der optischen Komponenten 1, 1', 1" nach dem zuvor beschriebenen Verfahren wird die Montage der optischen Komponenten 1, 1', 1" in das optische System vorteilhaft deutlich vereinfacht. Das optische System weist vorteilhaft eine Gehäusestruktur 19 auf, die mechanische Anschlagsflächen für die Montage der optischen Komponenten 1, 1', 1" aufweist. Die mechanischen Anschlagsflächen zu den optischen Komponenten 1, 1' und 1" an der Gehäusestruktur 19 werden vorteilhaft durch einen ultrapräzisen Bearbeitungsprozess bearbeitet. Beispielhaft kann eine mikrospanende Bearbeitung der mechanischen Anschlagsflächen geschehen, indem die gesamte Gehäusestruktur 19 ebenfalls auf die zuvor beschriebenen Bearbeitungsmaschine 10 aufgenommen wird. Nach der Bearbeitung liegen die mechanischen Anschlagsflächen in hoher Form- und Lagegenauigkeit an der Gehäusestruktur 19 vor. Da die Lage der optischen Funktionsflächen der optischen Komponenten 1, 1', 1" relativ zu den Montageflächen 5' der optischen Komponenten 1, 1', 1" nach Durchführung des zuvor beschriebenen Herstellungsverfahrens mit hoher Präzision bekannt ist, reduziert sich die Systemmontage des kompletten Teleskopes auf ein Anschlagen der der optischen Komponenten 1, 1', 1" gegen die gemeinsame Gehäusestruktur 19. Die präzise Lageinformation ermöglicht einen Einbau der optischen Komponenten 1, 1' und 1" nahe ihrer optimalen Position. Meist kann ein direkter optischer Systemtest, zum Beispiel mit Hilfe eines Interferometers, erfolgen, um beispielweise eine Wellenfrontinformation des optischen Systems zu messen. Gegebenenfalls erfolgt eine iterative Manipulation und Justierung der optischen Komponenten 1, 1', 1" entlang der offenen Freiheitsgrade der Gehäusestruktur 19 bis zum Erreichen einer definierten Systemspezifikation. In jedem Fall ist durch die Anwendung des hier beschriebenen Verfahrens die Justierung deterministisch und meist in wenigen Iterationen abgeschlossen.

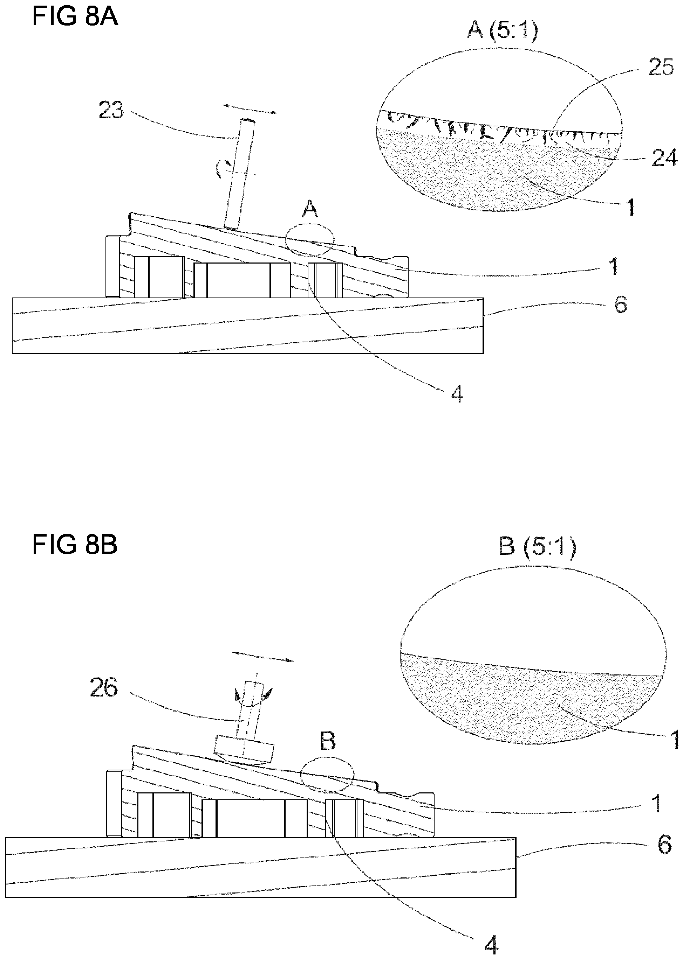

In Fig. 8A ist eine vorteilhafte Ausführungsform des Verfahrens dargestellt, bei der die Bearbeitungsvorrichtung 6 bereits während der Herstellung der optischen Funktionsfläche 2 der optischen Komponente 1 verwendet wird. Die optische Funktionsfläche 2 wird beispielsweise durch Schleifen hergestellt. Fig. 8A zeigt eine Schnittdarstellung durch die optische Komponente 1, die Ausnehmungen 4 zur Ausbildung einer Leichtgewichtsstruktur aufweist, sowie eine Vergrößerung A der Oberfläche der optischen Komponente 1. Die optische Komponente 1 und die Bearbeitungsvorrichtung 6 sind durch einen Fügeprozess, wie beispielsweise einen temporären Klebeprozess, miteinander verbunden. Zur Bearbeitung wird die optische Komponente 1 über Referenzflächen, wie z.B. einer umlaufenden Zylinderfläche an der Bearbeitungsvorrichtung 6, referenziert und zentriert. Im Anschluss erfolgt z.B. ein Feinschleifprozess mittels eines Schleifwerkzeuges 23, indem die optische Funktionsfläche 2 der optischen Komponente 1 mechanisch bearbeitet wird. Nach dem Schleifen kann die optische Komponente in einem Messprozess analog zu Fig. 6 vermessen werden. Die ultrapräzise Bearbeitungsvorrichtung 6 inklusive deren Referenzflächen 7, 8, 9 kann vorteilhafterweise benutzt werden, um die relative Lage und Form der optischen Fläche 2 im Koordinatensystem der Bearbeitungsvorrichtung 6 zu vermessen. Im Anschluss kann ein Korrekturschleifen der optischen Funktionsfläche 2 erfolgen. Da bei Anwendung dieser vorteilhaften Ausführungsform des Verfahrens auch die Aufnahme und Referenzierung des Spiegelkörpers 1 in der Bearbeitungsmaschine 10 entsprechend Fig. 4 erfolgt, reduziert eine Verwendung der Bearbeitungsvorrichtung 6 bereits im Vorschleif- und Feinschleifprozess mögliche Bearbeitungsfehler und -iterationen signifikant. Nach dem Schleifprozess verbleibt allerdings eine oberflächennahe Schicht 24, innerhalb derer die optische Funktionsfläche 2 durch Tiefenschädigungen und Mikrorisse 25 im sprödharten Material gekennzeichnet ist. In diesem Fertigungszustand ist eine Verwendung als optische Funktionsfläche noch nicht möglich. Zur Entfernung der in der Vergrößerung A innerhalb Fig. 8A dargestellten Tiefenschädigung, wird die optische Funktionsfläche 2 durch einen nachfolgenden Polierprozess auspoliert, wobei mehrere Mikrometer Material entfernt werden können.

In Fig. 8B ist beispielhaft die optische Komponente 1 im Schnitt bei dem Polierprozess dargestellt. In einer vorteilhaften Ausführung des Verfahrens wird auch im Polierprozess die Bearbeitungsvorrichtung 6 verwendet, sodass alle Vorprozesse zur Herstellung der optischen Oberfläche 2 auf das Koordinatensystem der Bearbeitungsvorrichtung 6 referenziert werden können. Im Polierprozess bearbeitet ein Polierwerkzeug 26 die optische Funktionsfläche 2 der optischen Komponente 1, bis die in Fig. 8A dargestellte oberflächennahe und tiefengeschädigte Schicht 24 komplett entfernt ist (siehe Vergrößerung B in Fig. 8B). Analog zum Schleifprozess in Fig. 8A kann eine iterative Anwendung von Mess- und Bearbeitungsprozessen unter Zuhilfenahme der Bearbeitungsvorrichtung 6 geschehen, um die Form und relative Lage der optischen Funktionsfläche 2 bestmöglich zu fertigen. Als Resultat des in Fig. 8B dargestellten Polierprozesses liegt eine vorkonturierte optische Komponente entsprechend Fig. 1A und Fig. 1B vor. Im Anschluss durchläuft die optische Komponente 1 den Fertigungsprozess zur Herstellung der Referenz- und Montageflächen, wie er in den Figuren 2 bis 6 beispielhaft beschrieben und dargestellt ist.

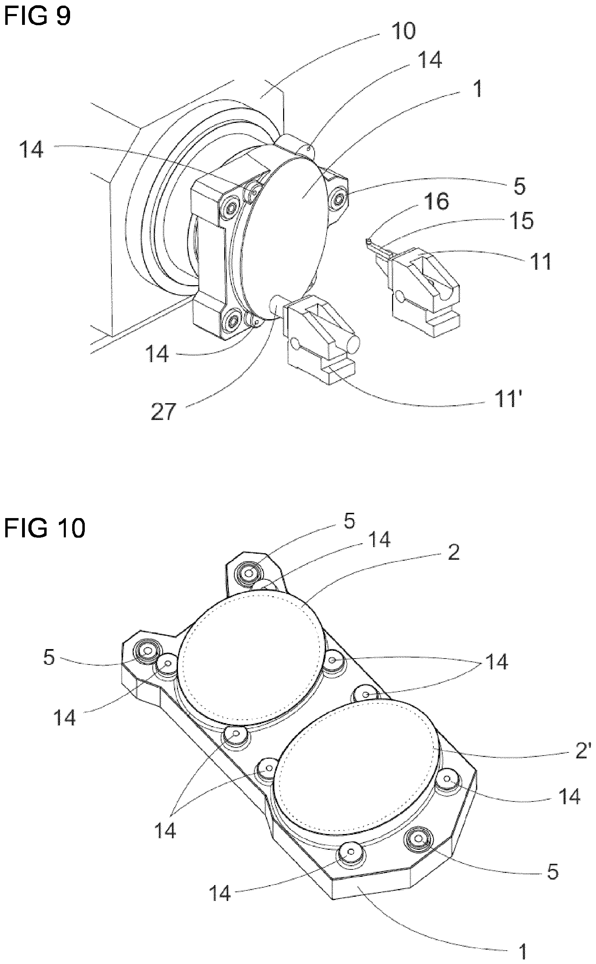

Eine weitere Ausführungsform des Verfahrens, welche ohne die Verwendung einer Bearbeitungsvorrichtung 6 auskommt, ist beispielhaft in Fig. 9 dargestellt. Die optische Komponente 1 aus sprödhartem Material, die wie in den vorherigen Beispielen ein Spiegelkörper ist, wird auf einer ultrapräzisen Bearbeitungsmaschine 10 aufgenommen. Die initiale Lage und Referenzierung der optischen Funktionsfläche der optischen Komponente 1 innerhalb des Maschinenkoordinatensystems erfolgt in dieser Ausführungsform ohne die Hilfe einer ultrapräzisen Bearbeitungsvorrichtung und wird durch ein Einmessen der optischen Funktionsfläche durch einen Messkopf 27 in einer Haltevorrichtung 11' durchgeführt. Nach dem Einmessen wird die Abweichung zur optimalen Position durch ein Einpassen der gemessenen Oberflächendaten (sog. "Best-Fit-Einpassung") ermittelt. Anschließend wird der Spiegelkörper 1 optional innerhalb der Maschinenumgebung justiert. Nachdem die Position des Spiegelkörpers 1 innerhalb des Koordinatensystems der Bearbeitungsmaschine 10 hinreichend exakt ermittelt wurde, erfolgt die Herstellung der Referenz- und Montageflächen 14, 5' an der optischen Komponente 1 durch ein Bearbeitungswerkzeug, wie beispielsweise ein Diamantdrehwerkzeug 16 innerhalb eines Drehprozesses.

Das Verfahren ist nicht auf die Herstellung von optischen Komponenten mit nur einer optischen Funktionsfläche 2 beschränkt. Beispielhaft ist in Fig. 10 eine optische Komponente 1 dargestellt, die ein optisches Spiegelmodul mit zwei optischen Funktionsflächen 2, 2' ist. Bei dem Verfahren werden beide Funktionsflächen 2, 2' in einer gemeinsamen Maschinenaufspannung gefertigt und vorteilhafterweise unter Verwendung einer gemeinsamen ultrapräzisen Bearbeitungsvorrichtung 6 in den Bearbeitungs- und Messprozessen referenziert. Ein Schritt des Verfahrens ist wiederum die Herstellung der Referenz- und Montageflächen an der optischen Komponente 1 durch Bearbeitung auf einer Bearbeitungsmaschine 10. Bei diesem Schritt werden beispielsweise Referenzflächen 14 in Form von Kugelsegmenten zur Vermessung der optischen Funktionsflächen 2, 2' innerhalb einer Messmaschine, sowie Montageflächen 5' zur Integration der optischen Komponente 1 in eine mechanische Gehäusestruktur 19 eines optischen Systems hergestellt. Das optische System kann beispielsweise ein Teleskop sein. Die Bearbeitung mehrerer optischer Funktionsflächen 2, 2' erhöht den Aufwand für die Fertigung und Messtechnik, reduziert jedoch signifikant den Aufwand für die Montage in das optische System durch die Reduzierung der offenen Justierfreiheitsgrade.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist, sofern die sich ergebende Kombination in den Schutzumfang der Ansprüche fällt.

### Bezugszeichenliste

- 1: optische Komponente
- 2: optische Funktionsfläche
- 3: Koordinatensystem
- 4: Ausnehmung
- 5: Einsetzkörper
- 5': Montagefläche
- 6: Bearbeitungsvorrichtung
- 7: Referenzfläche
- 8: Referenzfläche
- 9: Referenzfläche
- 10: Bearbeitungsmaschine
- 11: Bearbeitungswerkzeug
- 11': Haltevorrichtung
- 12: Bearbeitungswerkzeug
- 13: Bearbeitungswerkzeug
- 14: Referenzfläche
- 15: Werkzeughalter
- 16: Diamantwerkzeug
- 17: Messkopf
- 18: Messtaster
- 19: Gehäusestruktur
- 20: Objektebene
- 21: Strahlengang
- 22: Bildebene
- 23: Schleifwerkzeug
- 24: oberflächennahe Schicht
- 25: Mikrorisse
- 26: Polierwerkzeug
- 27: Messkopf

## Patentansprüche

1. Verfahren zur Herstellung eines optischen Systems mit einer optischen Komponente (1), die ein sprödhartes Material aufweist, umfassend die Schritte:
- Herstellen mindestens einer optischen Funktionsfläche (2) an der optischen Komponente (1),
- Aufnahme der optischen Komponente (1) auf eine Bearbeitungsmaschine (10) und Herstellen mehrerer Referenzflächen (14) und Montageflächen (5') an der optischen Komponente (1) oder an mindestens einem dauerhaft mit der optischen Komponente (1) verbunden Einsetzkörper (5) durch mindestens ein Bearbeitungswerkzeug (11, 12) der Bearbeitungsmaschine (10),
- Vermessen der Form und Lage der optischen Funktionsfläche (2) in einem auf die Referenzflächen (14) bezogenen Koordinatensystem (3),
- mindestens einmaliges Durchführen einer Korrekturbearbeitung, bei der die Form- und Lageabweichung der optischen Funktionsfläche (2) relativ zu den Referenz- und Montageflächen (5', 14) reduziert wird, und
- Einbau der optischen Komponente (1) in eine Gehäusestruktur (19) des optischen Systems an den Montageflächen (5').

2. Verfahren nach Anspruch 1,
wobei das sprödharte Material ein Glas, eine Keramik oder eine Glaskeramik ist.

3. Verfahren nach einem der vorhergehenden Ansprüche,
wobei die Referenzflächen (14) und/oder die Montageflächen (5', 14) im sprödharten Material der optischen Komponente (1) erzeugt werden.

4. Verfahren nach einem der vorhergehenden Ansprüche,
wobei die Referenzflächen (14) und/oder die Montageflächen (5') an dem mindestens einem dauerhaft an der optischen Komponente (1) angebrachten Einsetzkörper (5) erzeugt werden.

5. Verfahren nach einem der vorhergehenden Ansprüche,
wobei die Herstellung der Referenz- und/oder Montageflächen (5', 14) durch ein mikrospanendes Dreh-, Fräs- oder Hobelverfahren erfolgt.

6. Verfahren nach einem der vorhergehenden Ansprüche,
wobei die Herstellung der Referenz- und/oder Montageflächen (5', 14) durch ein Schleifverfahren oder ultraschallgestütztes Dreh- oder Fräsverfahren erfolgt.

7. Verfahren nach einem der vorhergehenden Ansprüche,
wobei die Herstellung der Referenz- und/oder Montageflächen (5', 14) durch einen laserunterstützten Dreh- oder Fräsprozess erfolgt.

8. Verfahren nach einem der vorhergehenden Ansprüche,
wobei die optische Komponente (1) vor der Herstellung der Referenz- und Montageflächen (5', 14) auf einer Bearbeitungsvorrichtung (6) angeordnet wird, welche weitere Referenzflächen (7, 8, 9) aufweist.

9. Verfahren nach Anspruch 8, wobei
die optische Komponente (1) beim Vermessen der Form und Lage der optischen Funktionsfläche (1) auf der Bearbeitungsvorrichtung (6) angeordnet ist, und wobei die Form und Lage der optischen Funktionsfläche (2) relativ zu den weiteren Referenzflächen (7, 8, 9) vermessen wird.

10. Verfahren nach Anspruch 8 oder 9,
wobei die optische Komponente (1) bei der Herstellung der optischen Funktionsfläche (2) und/oder bei einem nachfolgenden Formkorrektur- oder Polierprozess der optischen Funktionsfläche (2) auf der Bearbeitungsvorrichtung (6) angeordnet ist.

11. Verfahren nach einem der vorhergehenden Ansprüche,
bei dem die Korrekturbearbeitung der optischen Funktionsfläche (2) durch einen computergesteuerten Politurprozess oder durch ein Ionenstrahlwerkzeug erfolgt.

## Claims

1. A method of manufacturing an optical system having an optical component (1) comprising a brittle-hard material, comprising the steps of
- producing at least one optical functional surface (2) at the optical component (1),
- mounting of the optical component (1) on a processing machine (10) and producing several reference surfaces (14) and mounting surfaces (5') at the optical component (1) or at at least one insert body (5) permanently connected to the optical component (1) by at least one machining tool (11, 12) of the processing machine (10),
- measuring the shape and position of the optical functional surface (2) in a coordinate system (3) related to the reference surfaces (14),
- performing a correction machining at least once, in which the shape and position deviation of the optical functional surface (2) relative to the reference and mounting surfaces (5', 14) is reduced, and
- installation of the optical component (1) in a housing structure (19) of the optical system at the mounting surfaces (5').

2. The method according to claim 1,
wherein the brittle-hard material is a glass, a ceramic or a glass-ceramic.

3. The method according to any of the preceding claims,
wherein the reference surfaces (14) and/or the mounting surfaces (5', 14) are produced in the brittle-hard material of the optical component (1).

4. The method according to any of the preceding claims,
wherein the reference surfaces (14) and/or the mounting surfaces (5') are produced at the at least one insert body (5) permanently attached to the optical component (1).

5. The method according to any of the preceding claims,
wherein the reference and/or mounting surfaces (5', 14) are produced by a micro-machining turning, milling or planing process.

6. The method according to any of the preceding claims,
wherein the production of the reference and/or mounting surfaces (5', 14) is carried out by a grinding process or ultrasonic-supported turning or milling process.

7. The method according to any of the preceding claims,
wherein the reference and/or mounting surfaces (5', 14) are produced by a laser-assisted turning or milling process.

8. The method according to any of the preceding claims,
wherein the optical component (1) is arranged on a machining device (6) which comprises further reference surfaces (7, 8, 9) prior to the production of the reference and mounting surfaces (5', 14).

9. The method according to claim 8, wherein
the optical component (1) is arranged on the machining device (6) when measuring the shape and position of the optical functional surface (1), and wherein the shape and position of the optical functional surface (2) is measured relative to the further reference surfaces (7, 8, 9).

10. The method according to claim 8 or 9,
wherein the optical component (1) is arranged on the machining device (6) during the production of the optical functional surface (2) and/or during a subsequent shape correction or polishing process of the optical functional surface (2).

11. The method according to any of the preceding claims,
in which the correction processing of the optical functional surface (2) is carried out by a computer-controlled polishing process or by an ion beam tool.

## Revendications

1. Un procédé de fabrication d'un système optique avec un composant optique (1) qui présente un matériau dur et cassant, comprenant les étapes suivantes :
- Fabrication d'au moins une surface fonctionnelle optique (2) sur le composant optique (1),
- Prise du composant optique (1) sur une machine de traitement (10) et réalisation de plusieurs surfaces de référence (14) et surfaces de montage (5') sur le composant optique (1) ou sur au moins un corps d'insertion (5) relié en permanence au composant optique (1) par au moins un outil de traitement (11, 12) de la machine de traitement (10),
- Mesure de la forme et de la position de la surface fonctionnelle optique (2) dans un système de coordonnées (3) par rapport aux surfaces de référence (14),
- Réalisation au moins une fois d'un traitement de correction, lors duquel l'écart de forme et de position de la surface fonctionnelle optique (2) par rapport aux surfaces de référence et de montage (5', 14) est réduit, et
- Montage du composant optique (1) dans une structure de boîtier (19) du système optique aux surfaces de montage (5').

2. Le procédé selon la revendication 1,
dans lequel le matériau dur et cassant est un verre, une céramique ou une vitrocéramique.

3. Le procédé selon l'une des revendications précédentes,
dans lequel les surfaces de référence (14) et/ou les surfaces de montage (5', 14) sont créées dans le matériau dur et cassant du composant optique (1).

4. Le procédé selon l'une des revendications précédentes,
dans lequel les surfaces de référence (14) et/ou les surfaces de montage (5') sont produites sur le au moins un corps d'insertion (5) fixé de manière permanente au composant optique (1).

5. Le procédé selon l'une quelconque des revendications précédentes,
la fabrication des surfaces de référence et/ou de montage (5', 14) étant réalisée par un procédé de tournage, de fraisage ou de rabotage à micro-copeaux.

6. Le procédé selon l'une des revendications précédentes,
la fabrication des surfaces de référence et/ou de montage (5', 14) étant réalisée par un procédé de meulage ou un procédé de tournage ou de fraisage assisté par ultrasons.

7. Le procédé selon l'une quelconque des revendications précédentes,
la fabrication des surfaces de référence et/ou de montage (5', 14) étant effectuée par un processus de tournage ou de fraisage assisté par laser.

8. Le procédé selon l'une des revendications précédentes,
dans lequel, avant la fabrication des surfaces de référence et de montage (5', 14), le composant optique (1) est disposé sur un dispositif de traitement (6) qui présente d'autres surfaces de référence (7, 8, 9).

9. Le procédé selon la revendication 8, dans lequel le
composant optique (1) est disposé sur le dispositif de traitement (6) lors de la mesure de la forme et de la position de la surface fonctionnelle optique (1), et dans lequel la forme et la position de la surface fonctionnelle optique (2) sont mesurées par rapport aux autres surfaces de référence (7, 8, 9).

10. Le procédé selon la revendication 8 ou 9,
dans lequel le composant optique (1) est disposé sur le dispositif de traitement (6) lors de la fabrication de la surface fonctionnelle optique (2) et/ou lors d'un processus ultérieur de correction de forme ou de polissage de la surface fonctionnelle optique (2).

11. Le procédé selon l'une des revendications précédentes,
dans lequel le traitement de correction de la surface fonctionnelle optique (2) est effectué par un processus de polissage commandé par ordinateur ou par un outil à faisceau d'ions.
